# EUROPEAN PATENT APPLICATION

(11) **EP 2 508 794 A2**
(43) Date of publication of application: **10.10.2012**
(21) Application number: 10834751.9
(22) Date of filing: 26.11.2010
(51) Int. Cl.: F21V 3/00, F21V 17/12

(54) **LIGHTING DEVICE**

(30) Priority: 01.12.2009 KR 20090117531
(71) Applicant: Evolight, Seoul 100-846 (KR)
(72) Inventor: YANG, Kyung-Ho, Yangpyeong-gun Gyeonggi-do 476-812 (KR)
(74) Representative: Müller-Boré & Partner Patentanwälte
(86) International application number: PCT/KR2010/008437
(87) International publication number: WO 2011/068336

(57) **Abstract**

The present invention relates to a lighting device comprising lighting equipment, a light-emitting tube, and a connection cap. The lighting equipment includes: a case having a plurality of light-transmitting portions for transmitting light emitted by a plurality of LEDs into different directions; a power/data circuit device arranged in the center of the case; an input terminal formed on the surface of the center of the case to apply power and input data to the power/data circuit device; an output terminal for outputting the power and data applied/inputted to the power/data circuit device; and a plurality of connection terminals for supplying the power and data applied/inputted to the power/data circuit device to a plurality of LED modules. The light-emitting tube consists of light-transmitting plates, a light-blocking partition, and tubes. One side of the connection cap has an insertion hole to which one of the light-transmitting plates arranged at both sides of the light-emitting tube is removably inserted, and the other side has a female thread to be coupled to the male thread formed at each of the light-transmitting portions of the lighting equipment.

## Description

### Technical Field

The present invention relates to a lighting device, and in particular to a lighting device which makes it possible to express various characters, symbols and images with colorful lights by providing a lighting device with a plurality of light emitting parts externally emitting lights from LEDs, and a plurality of light decoration tubes connected with the light emitting parts of the lighting device, respectively.

### Background Art

A LED (Light Emitting Device) produces bright light with a much lower power than an incandescent lamp, a fluorescent lamp, etc. The LED can produce various color lights in combination with red, green and blue color lights. Since the LED is well not damaged even when the on/off operations are repeatedly performed, it is widely applied to an electronic board expressing characters, numbers, images, etc., a lamp for lighting an indoor or outdoor space, and a traffic light and a streetlamp installed on a road.

In case of the electronic board which generally expresses characters, numbers and images with the LED in a conventional art, the light from the LED itself becomes a point light source, thus expressing characters, numbers and images, so it is needed to very closely arrange the neighboring LEDs in vertical and horizontal directions so as to express the characters on an electronic board, so a great number of LEDs should be mounted on the electronic board. In case of the lighting lamp, it is possible to light surroundings with the light from a plurality of LEDs mounted therein, but it is hard to express characters with the light from the LEDs mounted the lighting lamp.

### Disclosure of Invention

Accordingly, it is an object of the present invention to provide a lighting device which comprises a lighting device with a plurality of light emitting parts each equipping with LEDs, and light decorating tubes which are connected to the plurality of the light emitting parts provided in the lighting device. As such, it is possible to express characters, numbers and images in various forms in the indoor and outdoor spaces of a building and in the indoor and outdoor spaces of various exhibition sites as the means for lighting with the light decorating tubes with the aid of lights from the LEDs. In addition, the light decorating device is characterized in that the lighting device can be separated from the light decorating tubes when not in use, and the volume of the light decorating tubes can be minimized, which results in easier storage and transfer.

In order to overcome the above problems, there is provided a lighting device, comprising a lighting device which includes a casing in which a plurality of LED modules are mounted, and a plurality of light emitting parts are mounted for emitting the lights in different directions the lights coming from a plurality of LEDs installed in the LED modules; a power and data circuit device which is mounted in the interior of the central portion of the casing; an input terminal which is formed at a backside of the central portion of the casing and inputs a data which is a program for selectively flickering the power externally supplied to the power and data circuit device and the plurality of the LEDs installed in the LED modules; an output terminal which outputs the power and data inputted in the power and data circuit device; and a plurality of connection terminals for supplying the power and data inputted into the power and data circuit device to the plurality of the LED modules engaged in the plurality of the light emitting modules; a light emitting tube which connects the lighting devices and is protruded for a connection to the plurality of the light emitting parts formed in the casing of the lighting device and is constituted in such a way that the lights from the plurality of the light emitting parts can transmit toward the interior via the side surface and is formed a transparent material or a semi-transparent material for the purpose of emitting lights by means of the lights inputted into the interior via the side surface; a light interruption partition which is formed in the interior of the light emitting tube for the purpose of preventing the lights of different colors coming into the interior via both sides of the light emitting tube from being mixed with one another as the lights are emitting from the lighting devices connected to both sides of the light emitting tubes; and a connection cap which connects the light emitting tubes and the light emitting device.

In addition, the present invention is characterized in that at an outer side of the light emitting tube is provided a code accommodation part, in which the power and data connection code is inserted and installed, for the purpose of supporting the power and data connection code connecting the neighboring lighting devices to the input side connection part and the output side connection part formed at the backside of each lighting device for thereby sharing externally inputted power and various data.

In addition, the present invention is characterized in that the light emitting tube is made from a solid or smooth material, and when it is made from a smooth material there is provided an air injection port for injecting air into the interior of the tube so as to expand the light emitting tube, and a connection through hole is formed at the light interruption partition so that the air inputted into the interior of the tube via the air injection port formed at one side of the light emitting tube can flow over the whole portions.

### Advantageous effects

The present invention is advantageously characterized in that the indoor and outdoor spaces of a building or various exhibition sites can be decorated with various color lights with a plurality of light emitting tubes which are protruded and continuously connected in the vertical and horizontal directions at a plurality of light emitting parts in different directions, and the characters, numbers and images can be decorated with various colors while changing the light from the plurality of the light emitting tubes with various colors.

### Brief Description of Drawings

The present invention will become better understood with reference to the accompanying drawings which are given only by way of illustration and thus are not limitative of the present invention, wherein;
Figure 1 is a front perspective view for describing the present invention;
Figure 2 is a rear perspective view of the present invention;
Figure 3 is a separation perspective view illustrating a lighting device and a light emitting device according to the present invention;
Figure 4 is a cross sectional view illustrating an assembled state so as to show a connection state between a lighting device and a light emitting tube according to the present invention;
Figure 5 is a cross sectional view illustrating a connection state of a plurality of LED modules and a power/data circuit device mounted in a lighting device according of the present invention; and
Figure 6 is a view illustrating a use state of a light decorating device according to the present invention.

### Modes for carrying out the invention

The preferred embodiments of the lighting device according to the present invention will be described with reference to the accompanying drawings.

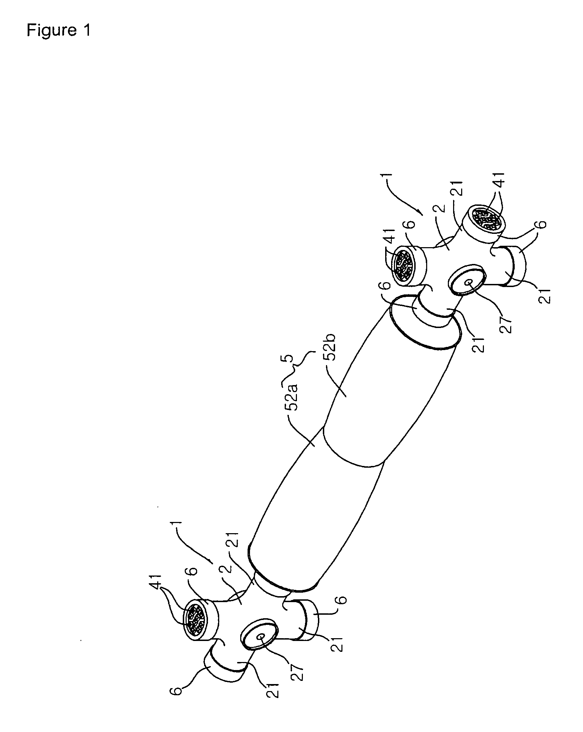

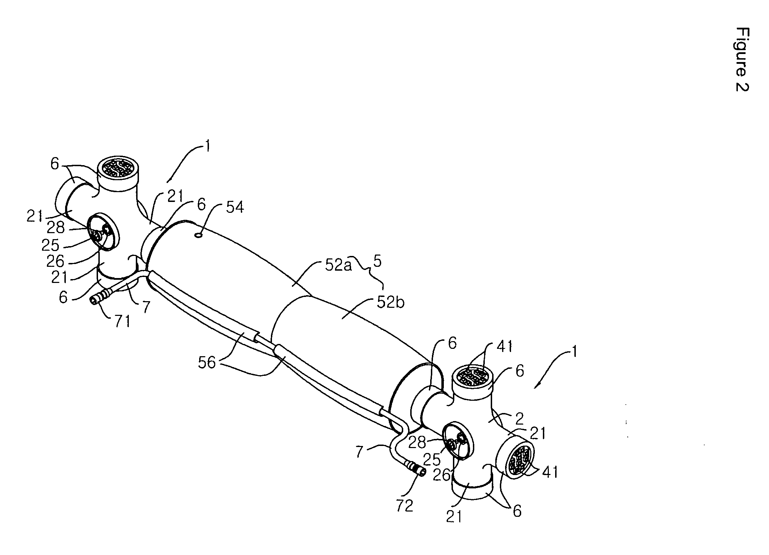

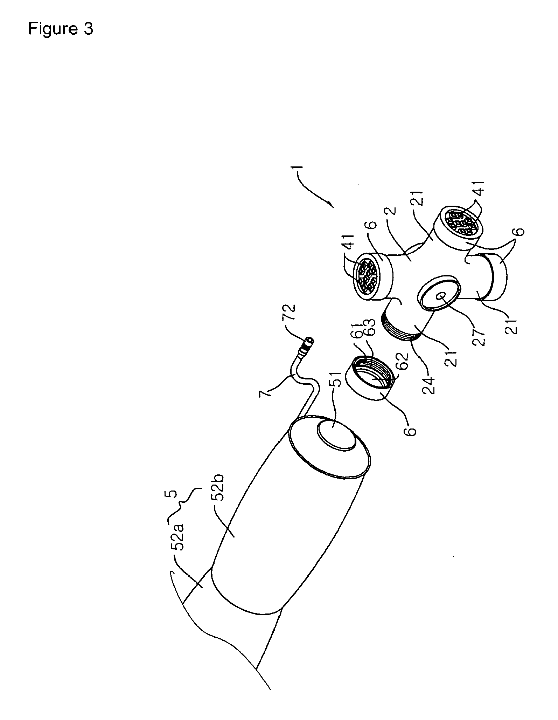

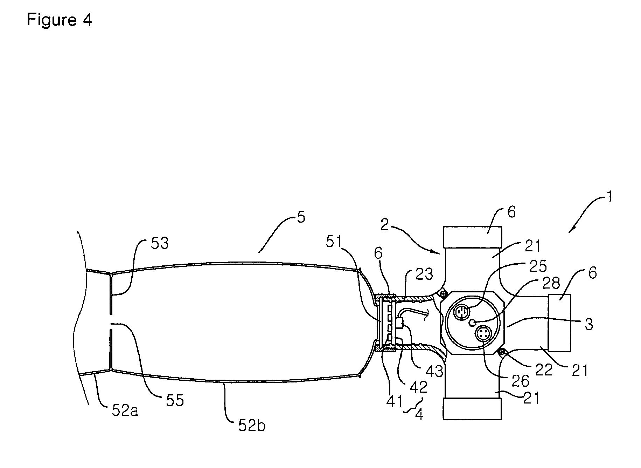

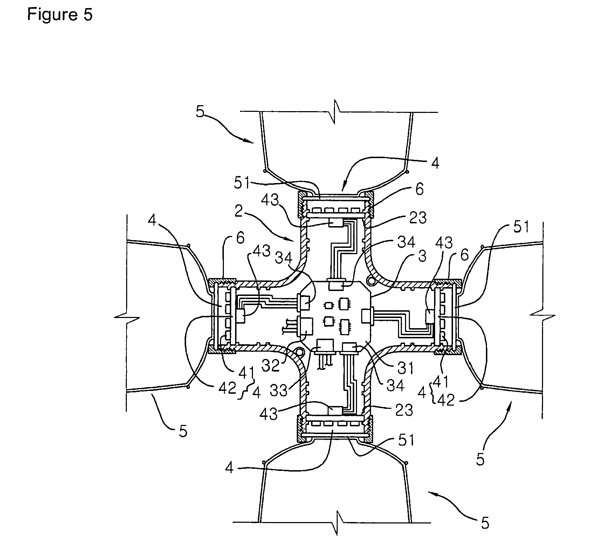

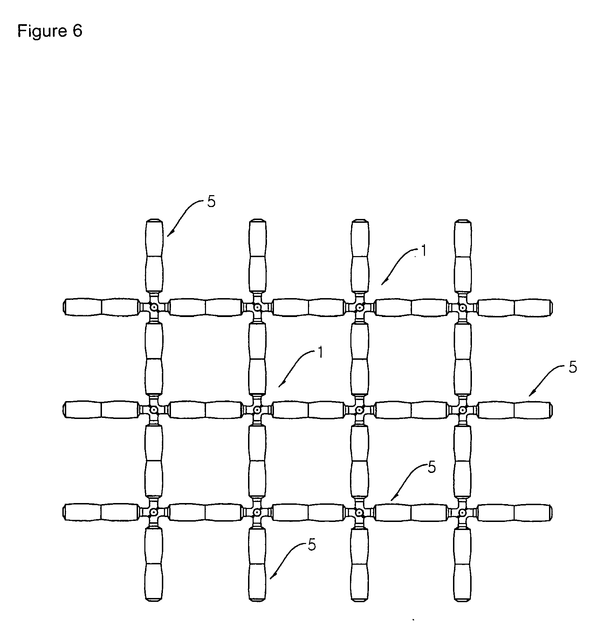

Figure 1 is a front perspective view for describing the present invention; Figure 2 is a rear perspective view of the present invention; Figure 3 is a separation perspective view illustrating a lighting device and a light emitting device according to the present invention; Figure 4 is a cross sectional view illustrating an assembled state so as to show a connection state between a lighting device and a light emitting tube according to the present invention; Figure 5 is a cross sectional view illustrating a connection state of a plurality of LED modules and a power/data circuit device mounted in a lighting device according of the present invention; and Figure 6 is a view illustrating a use state of a light decorating device according to the present invention.

Reference number 1 is a lighting device. The lighting device 1 comprises a + shaped casing 2 in which a plurality of light emitting parts 21 face in different directions from one another, and a power/data circuit device 3 disposed at the center of the interior of the casing 2.

The casing 2 is formed as the divide cases of both sides which are symmetrically formed are engaged by means of a plurality of assembling bolts 22 or are thermally coupled by means of an ultrasonic vibration. A pair of opposite insertion protrusions 2 are provided at the inner side of each of the light emitting parts 2 provided in the casing for the purpose of fixedly attaching the plurality of the LED modules 4 which each have a printed circuit board 42 with a plurality of LEDs being mounted thereon.

The power and data circuit device 3 comprises a printed circuit board 31 with various electronic parts (IC chips) arranged depending on the design, an input terminal 32 which is mounted on the printed circuit board for externally receiving an electric power and various data (the program for flickering the plurality of the LEDs installed at the LED module, hereinafter referred to "data"), an output terminal 33 for outputting the power and data which are received via the input terminal 32 and a plurality of connection terminal 34 which are mounted on the printed circuit board 31 for thereby supplying the power and data, which are received via the input terminal 32, to each of the LED modules 4.

The plurality of the LED modules 4 are mounted at the inner side of the plurality of the light emitting parts 21 provided in the casing of the lighting device 1 for thereby emitting the lights that the plurality of the LEDs 41 arranged on the printed circuit board 42 emit to the outside. In addition, at the backside of each printed circuit board 42 of each LED module 4 is provided a connection terminal 43 which is electrically connected with a connection terminal, one by one, among the plurality of the connection terminals 34 formed at the power and data circuit device 3 for thereby receiving power and data.

At the plurality of the + shaped light emitting parts 21 formed to face in different directions at the casing 2 of the lighting device 1 is detachably connected the light emitting tube 5. For the above mentioned construction, there is further provided a connection cap 6 with a female screw 61 which is detachably thread-connected with the male screw 24 formed at each of the light emitting part 21. At the backside of the casing 2 are provided an input side connection part 25 for receiving power and data, and an output side connection part 26 for outputting power and data.

At the central portion of the front side and backside of the casing 2 are provided female screw holes 27 and 28, and each of the female screw holes 27 and 28 is used for the purpose of fixedly attaching the lighting device 1 to a support bolt (not shown) protruded from a wall surface of a building.

The light emitting tube 5 is formed in such a way that a light transmission plate 51 made from a transparent or semitransparent synthetic resin flexible material through which light can transmit is formed at both sides of it in an exposed state, and both side tubes 52a and 52b long-extended in a rod shape with both ends of it being closed are thermally bonded to both side light transmission plates 51. Each edge portion of each of the both side light transmission plates 51 remains not-bonded. Therefore, when the both side light transmission plate 51 is inwardly inserted via the insertion hole 62 formed at the connection cap 6 while applying force to the both side light transmission plate 51 in a flexibly bent state, the light transmission plate 51 can be inserted into the insertion hole 62 of the connection cap 6. When the light transmission plate 51 is inserted into the insertion hole 62 of the connection cap 6, and the force applied to the light transmission plate 51 is removed, it recovers (horizontal state) to the original state by means of the elastic recovery force itself, so it is caught by means of a circular engaging shoulder 63 formed at a circumference of the insertion hole 62.

In addition, a light interruption partition 53 is provided at an intermediate portion of the interior for the purpose of preventing the lights of different colors coming into the interior from both sides via the both side light transmission plate 51 from being mixed with one another, and an air injection port 54 is provided at the one side tube 52a for injecting air.

At the light interruption partition 53 is provided a connection through hole 55 for allowing the air injected into the interior of the one side tube 52a via the air injection port 54 to input into the interior of the other side tube 52b. The air injection port 54 and the connection through hole 55 are made from a flexible material for thereby making possible it to expanding the whole portions of the tube 5 like a balloon. In case that the light emitting tube 5 is made from a solid, rigid material, the injection of air is not needed.

There is provided a power and data connection code 7 connecting the input side of the one side lighting device and the output side connection part 26 of the other side lighting device so that the power and data which are externally applied to the neighboring lighting devices 1. A code accommodation part 56 both sides of which are open is attached in a hose shape to an outer side (in details, a backside) of each of the both side tubes 52a and 52b of the light emitting tube 5.

In addition, the power and data connection code 7 is equipped with both side connectors 71 and 72 which are detachably attached to the input side connection part 25 and the output side connection part 26 of the lighting device 1 at both sides, respectively.

The operation of the present invention will be described.

In the lighting device 1, the light emitting tube 5 is connected one by one to each of the light emitting parts 21 which are provided in different directions at the + shaped casing 2. At this time, the connection caps 6 thread-engaged to the male screws 24 of the plurality of the light emitting part 21 are thread-loosened and detached. The air injection port 54 formed at the one side tube 52a of the light emitting tube 5 is opened, and the air filled in the both side tubes 52a and 52b is discharged, and the light interruption plate 51 formed at either side of the light emitting tube 5 is connected to the connection cap 6.

A force is applied from both sides to the light transmission plate 51 thermally bonded to the end of the one side tube 52a of the both side tubes 52a and 52b, thus bending it in a U shape, and the light transmission plate 51 is inserted into the insertion hole 62 of the connection cap 6. After it is inserted, the force applied to the light transmission plate 51 is removed, and the U-bent light transmission plate 51 returns to the horizontal state by means of an elastic recovery force itself at the inner side of the one side connection cap 6, so the circumference of it is caught by means of the circular engaging shoulder 63. Afterward, the light transmission plate 51 thermally bonded to the end of the other side tube 52b of the light emitting tube 5 is inserted into the other side connection cap 6 in the same manner.

Each of the both side connection cap 6 in which the both side light transmission plat 51 thermally bonded to the end of each of the both side tubes 52a and 52b is inserted is thread-assembled to the both side male screw 24 of the casing 2, so it is possible to connect one light emitting tube 5 to two lighting devices 1 which are opposite to each other in a straight line shape. Air is injected via the air injection port 54 of the light emitting tube 5 connected to the both side lighting device 1, thus expanding the light emitting tube 5. When the light emitting tube 5 is fully expanded, the air injection port 54 is closed. The above methods are repeatedly performed, which leads to that the plurality of the lighting devices 1 and the plurality of the light emitting tubes 5 are connected in vertical and horizontal directions as shown in Figure 6.

One lighting device 1 positioned at the edge portion among the plurality of the lighting devices 1 vertically and horizontally connecting the plurality of the light emitting tubes 5 is selected, and the output side connector 72 of the power and data connection code7 inputting an externally supplied power and data is connected to the input side connection part 25 of the lighting device 1. The plurality of the power and data connection codes 7 are step by step and continuously connected to the whole portions of the plurality of the lighting devices 1 in such a way that the input side connector 71 of the power and data connection code 7 is connected to the output side connection part 26 of the lighting device 1 to which the power and data are inputted. The plurality of the lighting devices 1 in which the plurality of the light emitting tubes 5 are vertically and horizontally connected form a closed circuit which can operate each LED module 4 depending on the previously set program.

In the LED modules 4 engaged at the both side light emitting part 21 of the neighboring lighting device 1 as the plurality of the light emitting tubes 5 are connected to the plurality of the lighting devices 1 connected to form a closed circuit, the lights emitting with different colors transmit the light transmission plate 51 and are made incident into the interiors of the both side tubes 52a and 52b. At this time, the light interruption partition 53 formed at the intermediate portion of the interior of the light emitting tube 5 interrupts the light coming into the interior of the both side tubes 52aand 52b, so the lights coming into the interior of each of the both side tubes 52a and 52b are not mixed, so only the light coming into the interior of each interior emit bright light.

So, it is possible to express characters, numbers, symbols and images using the colors of lights coming into the interior of each of the plurality of the light emitting tubes vertically and horizontally and continuously connected. Various color lights can be generated, with which characters, numbers, symbols, etc. change in various colors in such a way to change the colors of lights to have various changing colors, the lights coming into the plurality of the light emitting tubes 5, which are vertically and horizontally and continuously connected, depending on the previously set program.

The power and data connection code 7 connected so as to supply the power and data to each of the lighting devices 1 which are close in vertical and horizontal directions is connected to the input side connection part 25 and the output side connection part 26 of the both side lighting device 1 in which the both side connectors 71 and 72 are neighboring, in a state that it is inserted in the code accommodation part 56 formed at a backside of each of the both side tubes 52a and 52b of the light emitting tube 5. So, the power and data connection code 7 is not sagged and protruded from the backside of each light emitting tube 5, but is hidden by means of the code accommodation part 56, so the plurality of the light emitting tubes 5 emit and express various color light decorations depending on the set programs.

### Industrial applicability

The present invention makes it possible to light the indoor and outdoor spaces with a means lighting the light decoration tubes with the lights from the LEDs and to provide various decoration effects with various colors, so it can be well applied to the decorations of the exhibition sites.

## Claims

1. A lighting device, comprising:
a lighting device which includes:
a casing in which a plurality of LED modules are mounted, and a plurality of light emitting parts are mounted for emitting the lights in different directions the lights coming from a plurality of LEDs installed in the LED modules;
a power and data circuit device which is mounted in the interior of the central portion of the casing;
an input terminal which is formed at a backside of the central portion of the casing and inputs a data which is a program for selectively flickering the power externally supplied to the power and data circuit device and the plurality of the LEDs installed in the LED modules;
an output terminal which outputs the power and data inputted in the power and data circuit device; and
a plurality of connection terminals for supplying the power and data inputted into the power and data circuit device to the plurality of the LED modules engaged in the plurality of the light emitting modules;
a light emitting tube which connects the lighting devices and is protruded for a connection to the plurality of the light emitting parts formed in the casing of the lighting device and is constituted in such a way that the lights from the plurality of the light emitting parts can transmit toward the interior via the side surface and is formed a transparent material or a semi-transparent material for the purpose of emitting lights by means of the lights inputted into the interior via the side surface;
a light interruption partition which is formed in the interior of the light emitting tube for the purpose of preventing the lights of different colors coming into the interior via both sides of the light emitting tube from being mixed with one another as the lights are emitting from the lighting devices connected to both sides of the light emitting tubes; and
a connection cap which connects the light emitting tubes and the light emitting device.

2. A lighting device according to claim 1, wherein at an outer side of the light emitting tube is provided a code accommodation part, in which the power and data connection code is inserted and installed, for the purpose of supporting the power and data connection code connecting the neighboring lighting devices to the input side connection part and the output side connection part formed at the backside of each lighting device for thereby sharing externally inputted power and various data.

3. A lighting device lights according to claim 1, wherein said light emitting tube is made from a solid or smooth material, and when it is made from a smooth material there is provided an air injection port for injecting air into the interior of the tube so as to expand the light emitting tube, and a connection through hole is formed at the light interruption partition so that the air inputted into the interior of the tube via the air injection port formed at one side of the light emitting tube can flow over the whole portions.
